(19) Europäisches Patentamt
European Patent Office
Office européen des brevets

(11) EP 4 729 808 A1

(12) EUROPEAN PATENT APPLICATION

(43) Date of publication:
**22.04.2026 Bulletin 2026/17**

(21) Application number: **25207598.1**

(22) Date of filing: **08.10.2025**

(51) International Patent Classification (IPC):
***F16H 57/04*** *(2010.01)* ***F02C 7/36*** *(2006.01)*
***F16H 57/08*** *(2006.01)* ***F16C 17/02*** *(2006.01)*

(52) Cooperative Patent Classification (CPC):
**F16H 57/0479; F02C 7/36; F16C 17/02; F16H 57/043; F16H 57/0431; F16H 57/0435; F16H 57/0486; F16H 57/08;** F16H 2057/085

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.10.2024 US 202418918821**

(71) Applicants:
- **General Electric Company**
  **Cincinnati, Ohio 45215 (US)**
- **GE Avio S.r.l.**
  **10040 Rivalta di Torino (TO) (IT)**

(72) Inventors:
- **BEALL, Gunther**
  **Niskayuna, 12309-1027 (US)**
- **ZHANG, Xiaohua**
  **Niskayuna, 12309-1027 (US)**
- **RYALI, Lokaditya**
  **Niskayuna, 12309-1027 (US)**
- **CONLEY, Benjamin**
  **Niskayuna, 12309-1027 (US)**
- **VAIDYA, Kedar**
  **Niskayuna, 12309-1027 (US)**
- **ERTAS, Bugra**
  **Niskayuna, 12309-1027 (US)**
- **PIAZZA, Andrea**
  **10040 Rivalta di Torino (IT)**

(74) Representative: **Openshaw & Co.**
**8 Castle Street**
**Farnham, Surrey GU9 7HR (GB)**

# (54) GEARBOX ASSEMBLY FOR LUBRICATING GEARS

(57) A gearbox assembly (46) includes a planet gear (106) including an outer surface (144) and an inner surface (140) opposite the outer surface (144). A pair of circumferential oil channels (136) are formed in the inner surface (140) proximate opposite ends of the planet gear (106). A distributor channel (138) is formed to extend in a longitudinal direction toward a center of the planet gear (106) from each circumferential oil channel (136). One or more tooth channels (142) are formed to extend from each distributor channel (138) to the outer surface (144) of the planet gear (106). A journal pin (112) is received within the planet gear (106) extending along an axis (13) about which the planet gear (106) rotates. A gap (132) defines a journal bearing (133) formed between the inner surface (140) of the planet gear (106) and the journal pin (112). An internal bore (114) is formed in the journal pin (112) extending from an end of the journal pin (112) to the gap (132).



Processed by Luminess, 75001 PARIS (FR)

## Description

### TECHNICAL FIELD

The present specification generally relates to gearbox assemblies for turbine engines and, more specifically, systems and methods for lubricating gears of a gearbox assembly.

### BACKGROUND

Gearbox assemblies are widely used in various turbine engine applications based on their torque transmission capability. The efficient operation of these gearbox assemblies relies heavily on effective lubrication to reduce friction, wear, and overheating. Traditional lubrication systems in gearbox assemblies, particularly those used in turbine engines, often face challenges in terms of accessibility, efficiency, and adaptability. For example, conventional lubrication systems are typically located in positions that are not easily accessible, making maintenance and installation challenging. Furthermore, these conventional lubrication systems are sensitive to engine deflections and are susceptible to leakage, which can lead to operational inefficiencies and increased maintenance requirements. Accordingly, a need exists for systems and methods for lubricating gears of a gearbox assembly so as to provide enhanced efficiency while ensuring consistent and reliable lubrication.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:

FIG. 1 schematically depicts a cross-sectional diagram of a turbine engine, taken along a centerline axis of the turbine engine, according to one or more embodiments shown and described herein;

FIG. 2 schematically depicts a partial cross-sectional side view of a gearbox assembly for the turbine engine of FIG. 1, according to one or more embodiments shown and described herein;

FIG. 3 schematically depicts an enlarged partial cross-sectional side view of the gearbox assembly, according to one or more embodiments shown and described herein;

FIG. 4 schematically depicts a side view of a planet gear of the gearbox assembly including teeth intermeshing with teeth of adjacent gears, according to one or more embodiments shown and described herein;

FIG. 5 schematically depicts an enlarged partial side view of a tooth of the planet gear, according to one or more embodiments shown and described herein;

FIG. 6 schematically depicts a cross-sectional side view of the planet gear including a plurality of valves, according to one or more embodiments shown and described herein; and

FIG. 7 schematically depicts a cross-sectional side view of a valve in each of a first open position, a closed position, and a second open position, according to one or more embodiments shown and described herein.

### DETAILED DESCRIPTION

Embodiments described herein are directed to turbine engines, gearbox assemblies, and methods of supplying lubrication to gears of a gearbox assembly of a turbine engine. The gears of the gearbox assembly to which lubricant is supplied may be a planet gear. Specifically, lubricant is supplied to the teeth of the planet gear from a tank via a lubricant supply line that delivers lubricant to a journal pin about which the planet gear rotates. The lubricant is directed through the journal pin and into a gap defined between an inner surface of the planet gear and the journal pin. Centrifugal force created by rotation of the planet gear relative to the journal pin draws lubricant into passageways formed in the planet gear and to the teeth formed at the outer surface of the planet gear, thereby increasing lubrication between intermeshing of teeth of the planet gear and teeth of an adjacent gear of the gearbox assembly such as, for example, a sun gear.

Various embodiments of turbine engines, gear assemblies, and methods of supplying lubricant to gears of a gearbox assembly are described in more detail herein. Whenever possible, the same reference numerals will be used throughout the drawings to refer to the same or like parts.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

A turbine engine can be configured as a geared engine. Geared engines include a gearbox assembly utilized to transfer power from a turbine shaft to a main fan. Such gearbox assemblies may include a sun gear, a plurality of planet gears, and a ring gear. The sun gear meshes with the plurality of planet gears and the plurality of planet gears mesh with the ring gear. In operation, the gearbox assembly transfers the torque transmitted from the turbine shaft operating at a first speed to a fan shaft rotating at a second, lower speed. For a planetary configuration of the gearbox assembly, the sun gear may be coupled to the mid-shaft of a lower pressure turbine rotating at the first speed. The planet gears, intermeshed with the sun gear, then transfer this torque to the fan shaft through a planet carrier. In a star configuration, a ring gear is coupled to the fan shaft. In either configuration, the planet gears rotate about a journal pin in which a journal bearing is formed between the journal pin and the planet gears. The journal pin is inserted through the planet carrier and is typically fixed to the planet carrier by an interference fit.

Lubricant is supplied directly to the journal pins of the gearbox assembly. The lubricant is then routed to the other components, such as the journal bearings and the planet gears. For example, the lubricant may be routed to the journal bearings and the planet gears via channels running axially through the pins and radially to the journal bearings and the planet gears.

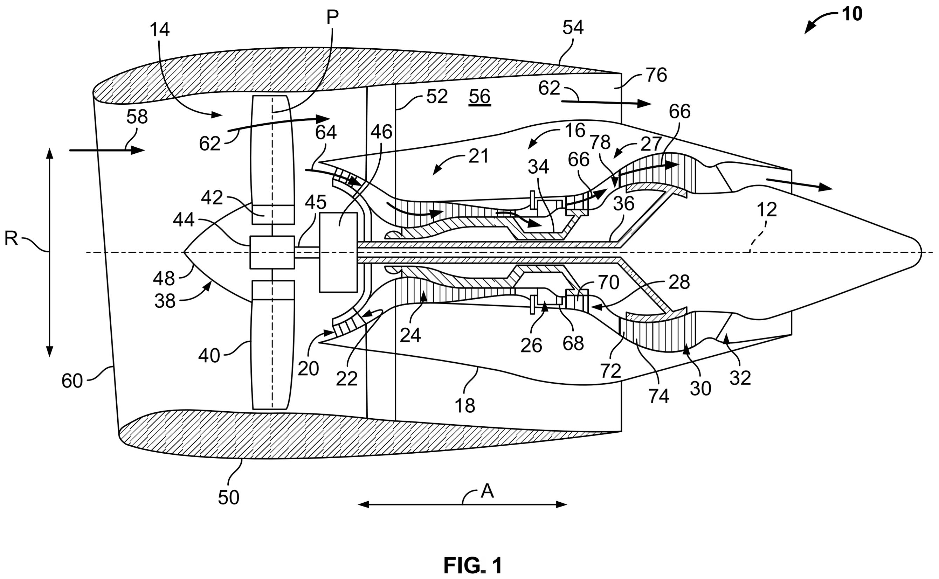

Referring now to the drawings, FIG. 1 depicts a cross-sectional view of a turbine engine 10, taken along a centerline axis of the turbine engine 10, according to an embodiment of the present disclosure. The turbine engine 10 defines an axial direction A (extending parallel to a longitudinal centerline 12 provided for reference) and a radial direction R that is normal to the axial direction A. In general, the turbine engine 10 includes a fan section 14 and a core turbine engine 16 disposed downstream from the fan section 14.

The core turbine engine 16 depicted generally includes an outer casing 18 that is substantially tubular and defines an annular inlet 20. As schematically shown in FIG. 1, the outer casing 18 encases, in serial flow relationship, a compressor section 21 including a booster or a low pressure (LP) compressor 22 followed downstream by a high pressure (HP) compressor 24, a combustion section 26, a turbine section 27 including a high pressure (HP) turbine 28 followed downstream by a low pressure (LP) turbine 30, and a jet exhaust nozzle section 32. A high pressure (HP) shaft 34 or spool drivingly connects the HP turbine 28 to the HP compressor 24 to rotate the HP turbine 28 and the HP compressor in unison. A low pressure (LP) shaft 36 drivingly connects the LP turbine 30 to the LP compressor 22 to rotate the LP turbine 30 and the LP compressor 22 in unison. The compressor section 21, the combustion section 26, the turbine section 27, and the jet exhaust nozzle section 32 together define a core air flowpath.

For the embodiment depicted in FIG. 1, the fan section 14 includes a fan 38 (e.g., a variable pitch fan) having a plurality of fan blades 40 coupled to a disk 42 in a spaced apart manner. As depicted in FIG. 1, the fan blades 40 extend outwardly from the disk 42 generally along the radial direction R. Each fan blade 40 is rotatable relative to the disk 42 about a pitch axis P by virtue of the fan blades 40 being operatively coupled to an actuation member 44 configured to collectively vary the pitch of the fan blades 40 in unison. The fan blades 40, the disk 42, and the actuation member 44 are together rotatable about the longitudinal centerline 12 via a fan shaft 45 that is powered by the LP shaft 36 across a gearbox assembly 46. The gearbox assembly 46 includes a plurality of gears for adjusting the rotational speed of the fan shaft 45 and, thus, the fan 38 relative to the LP shaft 36 to a more efficient rotational fan speed.

Referring still to the exemplary embodiment of FIG. 1, the disk 42 is covered by a rotatable fan hub 48 aerodynamically contoured to promote an airflow through the plurality of fan blades 40. In addition, the fan section 14 includes an annular fan casing or a nacelle 50 that circumferentially surrounds the fan 38 and/or at least a portion of the core turbine engine 16. The nacelle 50 is supported relative to the core turbine engine 16 by a plurality of circumferentially spaced outlet guide vanes 52. Moreover, a downstream section 54 of the nacelle 50 extends over an outer portion of the core turbine engine 16 to define a bypass airflow passage 56 therebetween.

During operation of the turbine engine 10, a volume of air 58 enters the turbine engine 10 through an inlet 60 of the nacelle 50 and/or the fan section 14. As the volume of air 58 passes across the fan blades 40, a first portion of air 62 is directed or routed into the bypass airflow passage 56, and a second portion of air 64 is directed or is routed into the upstream section of the core air flowpath, or, more specifically, into the annular inlet 20 of the LP compressor 22. The ratio between the first portion of air 62 and the second portion of air 64 is commonly known as a bypass ratio. The pressure of the second portion of air 64 is then increased as the second portion of air 64 is routed through the HP compressor 24 and into the combustion section 26, where the highly pressurized air is mixed with fuel and burned to provide combustion gases 66.

The combustion gases 66 are routed into the HP turbine 28 and expanded through the HP turbine 28 where a portion of thermal and/or of kinetic energy from the combustion gases 66 is extracted via sequential stages of HP turbine stator vanes 68 that are coupled to the outer casing 18 and HP turbine rotor blades 70 that are coupled to the HP shaft 34, thus, causing the HP shaft 34 to rotate, thereby supporting operation of the HP compressor 24. The combustion gases 66 are then routed into the LP turbine 30 and expanded through the LP turbine 30. Here, a second portion of thermal and kinetic energy is extracted from the combustion gases 66 via sequential stages of LP turbine stator vanes 72 that are coupled to the outer casing 18 and LP turbine rotor blades 74 that are coupled to the LP shaft 36, thus, causing the LP shaft 36 to rotate. This thereby supports operation of the LP compressor 22 and rotation of the fan 38 via the gearbox assembly 46.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before being exhausted from a fan nozzle exhaust section 76 of the turbine engine 10, also providing propulsive thrust. The HP turbine 28, the LP turbine 30, and the jet exhaust nozzle section 32 at least partially define a hot gas path 78 for routing the combustion gases 66 through the core turbine engine 16.

The turbine engine 10 depicted in FIG. 1 is by way of example only. In other exemplary embodiments, the turbine engine 10 may have any other suitable configuration. For example, in other exemplary embodiments, the fan 38 may be configured in any other suitable manner (e.g., as a fixed pitch fan) and further may be supported using any other suitable fan frame configuration. Moreover, it should be appreciated that, in other exemplary embodiments, any other suitable number or configuration of compressors, turbines, shafts, or a combination thereof may be provided. In still other exemplary embodiments, aspects of the present disclosure may be incorporated into any other suitable gas turbine engine, such as, for example, turbofan engines, propfan engines, turbojet engines, and/or turboshaft engines.

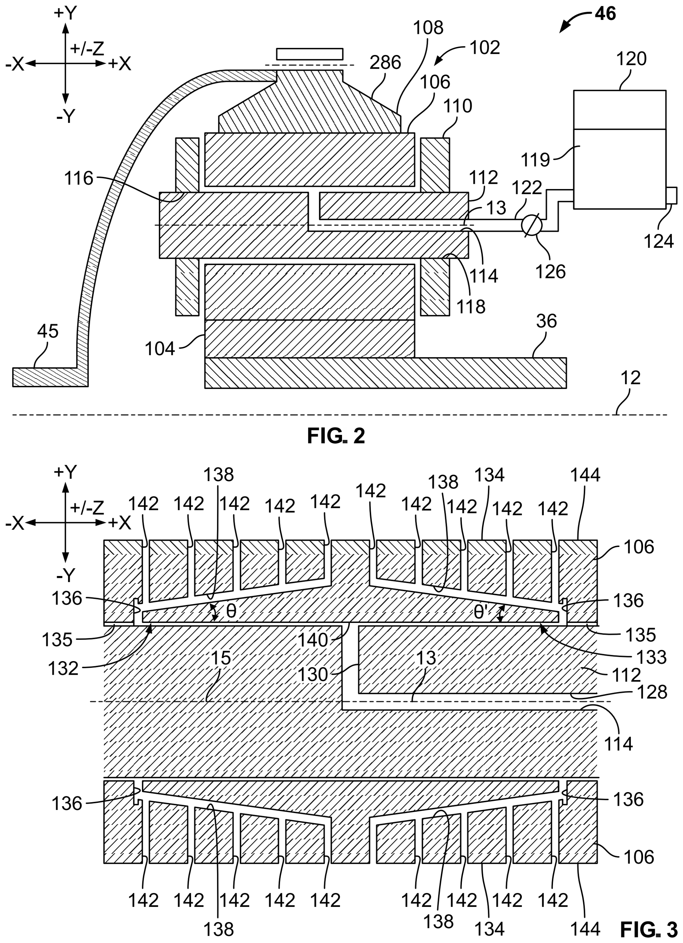

Referring now to FIG. 2, a cross-sectional side view of the gearbox assembly 46 of the turbine engine 10 (FIG. 1), which couples the LP shaft 36 to the fan 38 (FIG. 1) is depicted. The gearbox assembly 46 includes an epicyclic gearbox assembly 102 including a sun gear 104, a plurality of planet gears 106 (only one of which is visible in FIG. 2), and a ring gear 108. For clarity, only a portion of the gears is shown. Although not depicted in FIG. 2, each of the sun gear 104, the plurality of planet gears 106, and the ring gear 108 comprises teeth about their periphery to intermesh with the other gears. The gearbox assembly 46 is a star type or a rotating ring gear type gearbox assembly (e.g., the ring gear 108 is rotating and a planet carrier 110 is fixed and stationary). In such an arrangement, the fan 38 (FIG. 1) is driven by the ring gear 108. In this way, the ring gear 108 is an output of the gearbox assembly 46. However, other suitable type of gearbox assembly 46 may be employed. In one non-limiting example, the gearbox assembly 46 may be a planetary arrangement, in which the ring gear 108 is held fixed, and the planet carrier 110 is allowed to rotate. In such an arrangement, the fan 38 (FIG. 1) is driven by the planet carrier 110. In this way, the planet carrier 110 is the output of the gearbox assembly 46. In another non-limiting example, the gearbox assembly 46 may be a differential gearbox in which the ring gear 108 and the planet carrier 110 are both allowed to rotate.

A drive shaft (e.g., the LP shaft 36) is coupled to the sun gear 104. In this way, the sun gear 104 is an input of the gearbox assembly 46. In some examples, the drive shaft is the HP shaft 34 (FIG. 1). Radially outward of the sun gear 104, and intermeshing therewith, is the plurality of planet gears 106 that are coupled together and supported by the planet carrier 110. The planet carrier 110 supports and constrains the plurality of planet gears 106 such that the plurality of planet gears 106 do not together rotate around the sun gear 104 while enabling each planet gear of the plurality of planet gears 106 to rotate about its own axis 13. Radially outwardly of the plurality of planet gears 106, and intermeshing therewith, is the ring gear 108, which is an annular ring gear. The ring gear 108 is coupled via the fan shaft 45 to the fan 38 (FIG. 1) and rotates to drive rotation of the fan 38 (FIG. 1) about the longitudinal centerline 12. In this way, the ring gear 108 is an output of the gearbox assembly 46. In the planetary configuration, the planet carrier 110 is the output of the gearbox assembly 46.

Each of the planet gears 106 of the plurality of planet gears 106 includes a journal pin 112 about which a respective planet gear 106 rotates. For example, lubricant (e.g., oil) is provided between the journal pin 112 and a respective planet gear 106 such that the planet gear 106 rotates with respect to the journal pin 112. The gearbox assembly 46 includes a gear ratio that defines a ratio of the speed of the input gear (e.g., the sun gear 104) to the speed of the output (e.g., the ring gear 108) through the gearbox assembly 46. In the planetary configuration, the output is the planet carrier 110.

The journal pin 112 includes an oil passage 114 defined therethrough along the axis 13. The oil passage 114 extends from an end of the journal pin 112 to an outer surface of the journal pin and a gap 132 defined between the journal pin 112 and an associated planet gear 106. As described in more detail herein, lubrication is provided to the oil passage 114 such that the journal pin 112 delivers the lubricant between the journal pin 112 and the respective planet gear 106. The journal pin 112 is inserted through a first aperture 116 and a second aperture 118 of the planet carrier 110. In this way, the journal pin 112 is fixed to the planet carrier 110 by an interference fit at the first aperture 116 and the second aperture 118.

Referring still to FIG. 2, lubricant 119 is stored within a tank 120 and delivered to the journal pin 112 via a lubricant supply line 122 extending from the tank 120 to the journal pin 112. The lubricant supply line 122 is secured to an end of the oil passage 114 in any suitable manner to define a seal therebetween. The tank 120 may include a pump 124 for directing the lubricant 119 into the oil passage 114 of the journal pin 112 from the tank 120. In embodiments, the lubricant supply line 122 includes a valve 126. The valve 126 may be a one-way check valve, for example, that allows lubricant to flow through the valve 126 in only one direction, e.g., into the journal pin 112 from the tank 120 rather than into the tank 120 from the journal pin 112.

Referring now to FIG. 3, an enlarged view of the journal pin 112 and one of the planet gears 106 is shown in greater detail. In embodiments, as shown, the oil passage 114 of the journal pin 112 includes a longitudinal component 128 and a radial component 130 extending from an end of the longitudinal component 128. In embodiments, the radial component 130 extends perpendicular to the longitudinal component 128. In embodiments, the oil passage 114 may include a plurality of radial components 130 extending from the longitudinal component 128 with one of the plurality of radial components 130 centrally positioned along the +/-X axis of the coordinate axes depicted in the drawings. In embodiments, the longitudinal component 128 extends parallel to the axis 13. However, in embodiments, the oil passage 114 may include a single linear component extending at a constant angle from the end of the journal pin 112 at which the journal pin 112 is sealed to the lubricant supply line 122 (FIG. 2). As lubricant 119 (FIG. 2) is pumped from the tank 120 (FIG. 2) to the journal pin 112, centrifugal force caused by rotation of the planet gears 106 causes a pressure differential between the planet gears 106 and the associated journal pins 112. Accordingly, the centrifugal force causes the lubricant 119 to flow into the gap 132 defined between the journal pin 112 and an associated planet gear 106. Thereafter, the lubricant 119 flows outwardly within the gap 132 in a longitudinal direction along the journal pin 112 toward opposite ends of the planet gear 106. As used herein, the combination of the lubricant 119 within the gap 132 may be referred to as a journal bearing 133.

As shown in FIG. 3, the planet gear 106 includes one or more passageways for receiving the lubricant 119 from the oil passage 114 of the journal pin 112 and delivering the lubricant 119 to a plurality of teeth 134 of the planet gear 106 formed at an outer surface 144 of the planet gear 106 which intermesh with teeth of the other gears. It should be noted that the passageways are not illustrated in FIG. 2, but understood to be present. Although the structure of only one planet gear 106 is illustrated in FIG. 3 and described herein, it should be appreciated that the other planet gears 106 have a similar structure. Similarly, it should be appreciated that the journal pins 112 associated with each of the other planet gears 106 are also in fluid communication with the tank 120 (FIG. 2), as described herein.

With respect to the planet gear 106 illustrated in FIG. 3, the passageways are defined by a pair of circumferential oil channels 136 provided proximate opposite longitudinal ends of the planet gear 106. It should be appreciated that the rotation of the planet gear 106 relative to the journal pin 112 creates a pressure differential within the gap 132. Accordingly, the lubricant 119 is drawn into the gap 132 from the oil passage 114, which is pumped into the oil passage 114 by the pump 124 (FIG. 2), and directed into the circumferential oil channels 136. The pump 124 further assists in directing the lubricant 119 into the gap 132. In a typical journal bearing, oil would leak out of opposite open longitudinal ends. However, in the present journal bearing, the centrifugally-induced pressure differential draws the lubricant 119 into the circumferential oil channels 136 and prevents the lubricant 119 from exiting the gap 132 at opposite open longitudinal ends. In embodiments, a sealing surface 135 is provided at one or both of the opposite open longitudinal ends to further prevent the lubricant 119 from leaking out of the gap 132. The sealing surface 135 reduces a distance, or closes a distance entirely, between an inner surface 140 of the planet gear 106 and the journal pin 112. The sealing surface 135 may be defined by a thin space, a polymer lip, a spring, a mechanical seal, or the like.

The passageways are further defined by a pair of distributor channels 138 each extending inwardly from a respective circumferential oil channel 136. Each distributor channel 138 extends toward a longitudinal medial location of the planet gear 106 and terminates prior to intersecting the other distributor channel 138. The distributor channels 138 are oriented at an angle $\theta$ relative to the inner surface 140 of the planet gear 106 defining the gap 132 between the planet gear 106 and the journal pin 112. In embodiments, the angle $\theta$ is greater than 0 degrees and less than 90 degrees. In embodiments, the angle $\theta$ is greater than or equal to 10 degrees and less than or equal to 50 degrees. In embodiments, the angle $\theta$ is greater than or equal to 15 degrees and less than or equal to 45 degrees. In embodiments, the angle $\theta$ is greater than or equal to 20 degrees and less than or equal to 40 degrees. In embodiments, the angle $\theta$ is greater than or equal to 25 degrees and less than or equal to 35 degrees. In embodiments, the angle θ is 30 degrees +/- 5 degrees. In embodiments, the angle θ is 30 degrees +/- 10 degrees. In embodiments, the angle θ is 30 degrees +/- 15 degrees. In embodiments, the angle θ is 30 degrees +/- 20 degrees. In embodiments, the angle θ is 30 degrees +/- 25 degrees.

In embodiments, a first of the distributor channels 138 in the -X direction of the coordinate axes depicted in the drawings may be oriented at the angle θ while the second of the distributor channels 138 in the +X direction of the coordinate axes depicted in the drawings may be oriented at an angle θ' different than the angle θ at which the first of the distributor channels 138 is oriented. In embodiments, the angle θ' is less than the angle θ. In embodiments, the angle θ' is greater than the angle θ. In embodiments, the angle θ' is greater than 0 degrees and less than 90 degrees. In embodiments, the angle θ' is greater than or equal to 10 degrees and less than or equal to 50 degrees. In embodiments, the angle θ' is greater than or equal to 15 degrees and less than or equal to 45 degrees. In embodiments, the angle θ' is greater than or equal to 20 degrees and less than or equal to 40 degrees. In embodiments, the angle θ' is greater than or equal to 25 degrees and less than or equal to 35 degrees. In embodiments, the angle θ' is 30 degrees +/- 5 degrees. In embodiments, the angle θ' is 30 degrees +/- 10 degrees. In embodiments, the angle θ' is 30 degrees +/- 15 degrees. In embodiments, the angle θ is 30 degrees +/- 20 degrees. In embodiments, the angle θ' is 30 degrees +/- 25 degrees.

In embodiments, a plurality of tooth channels 142 extend from each of the distributor channels 138. The tooth channels 142 terminate at the outer surface 144 of the planet gear 106 to permit the lubricant 119 to coat the intermeshing teeth of adjacent gears. In embodiments, the tooth channels 142 extend in a linear direction from the distributor channels 138. However, as described in more detail herein, the tooth channels 142 may have any suitable shape and extend along any suitable contour. As shown in FIG. 3, each distributor channel 138 includes five tooth channels 142 equidistantly spaced apart from one another. However, each distributor channel 138 may have any number of tooth channels 142, including a single tooth channel 142, and the plurality of tooth channels 142 may be spaced apart from one another in any arrangement. For example, the distributor channels 138 may include one or more of tooth channels 142 closer to the circumferential oil channel 136 and one or more tooth channels 142 located closer to the longitudinal medial location of the planet gear 106 such that the tooth channels 142 are not equidistantly spaced from one another.

It should be appreciated that the distributor channels 138 being oriented at the angle θ encourages the flow of lubricant along the distributor channels 138 to each of the tooth channels 142 as a result of the centrifugal force during rotation of the planet gear 106. The orientation of the distributor channels 138 also adjusts the relative flow of lubricant 119 between the tooth channels 142 by changing a net distance, and thus resistance, of each tooth channel 142. Accordingly, in use, the lubricant 119 is pumped from the tank 120 (FIG. 2), into the oil passage 114 of the journal pin 112, and into the gap 132 forming the journal bearing 133. As the planet gear 106 rotates relative to the journal pin 112, centrifugal force draws the lubricant 119 within the gap 132 into the circumferential oil channels 136, along the distributor channels 138, and into each of the plurality of tooth channels 142.

The planet gear 106 may be formed to include the distributor channels 138 and the tooth channels 142 in any suitable manner. For example, planet gear 106 may be initially formed by casting, molding, or the like, and the distributor channels 138 and the tooth channels 142 separately formed within the planet gear 106 by drilling into the planet gear 106. For example, the distributor channels 138 may be formed by drilling into the planet gear 106 at an angle, and then drilling from the outer surface 144 of the planet gear 106 radially inwardly to contact to the distributor channels 138 to form the tooth channels 142. Alternatively, the planet gear 106 may be formed by milling channels defining the distributor channels 138 and the tooth channels 142 into plates, and then laminating the plates together to form a layer stack.

Although the planet gear 106 is described herein as being part of the gearbox assembly 46 located between the LP turbine 30 and the fan 38 (FIG. 1), it should be appreciated that the planet gear 106 may be any journal bearing mounted gear. For example, the planet gear 106 may be associated with any one of an accessory gearbox, an aircraft mounted accessory drive train, an aircraft mounted power gearbox, a tiltrotor gearbox, a turboprop reduction gearbox, and the like without departing from the scope of the present disclosure.

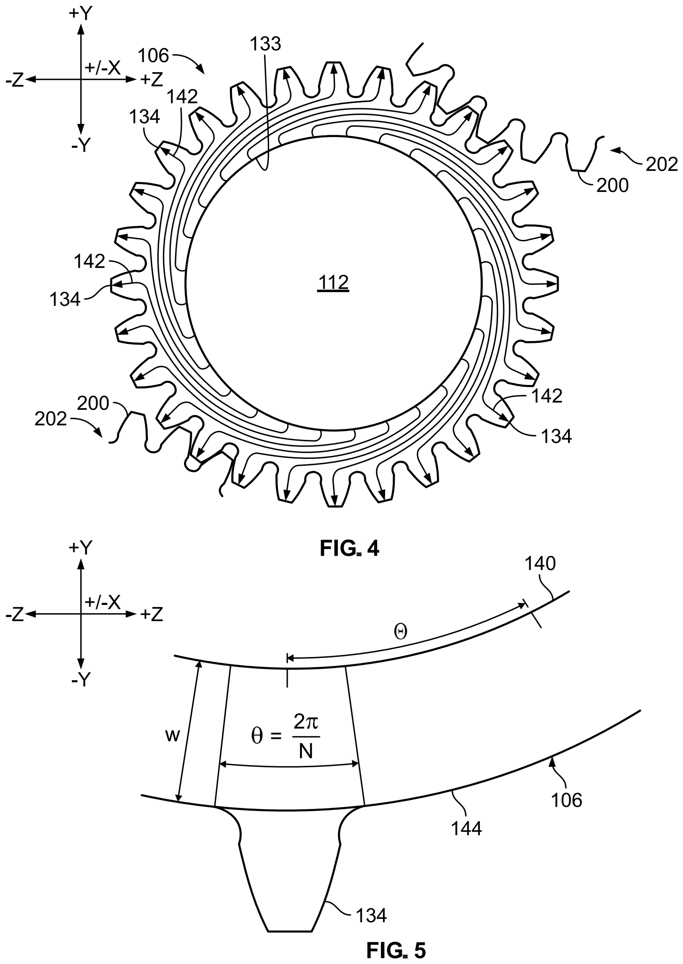

Referring now to FIG. 4, an embodiment of the planet gear 106 is shown including the plurality of teeth 134 provided along the periphery of the planet gear 106 that intermeshes with teeth 200 of a pair of adjacent gears 202. A plurality of arrows are illustrated indicating the tooth channel 142 for each passageway for lubricant to flow from the journal pin 112 to each of the plurality of teeth 134. Accordingly, as illustrated by the arrows, lubricant is delivered to each of the teeth 134 of the planet gear 106. However, in embodiments, each tooth 134 of the planet gear 106 may not include an associated passageway. Although only a single arrow is shown indicating a single tooth channel 142 for the lubricant 119 (FIG. 2) to flow within each of the teeth 134 of the planet gear 106, it should be appreciated that a plurality of tooth channels 142 are provided within each tooth 134 overlapping one another along the +/- X axis of the coordinate axes depicted in the drawings, as illustrated in FIG. 3. In embodiments in which a plurality of tooth channels 142 are provided within each tooth 134, the tooth channels 142 may be oriented at a different angular position such that the plurality of the tooth channels 142 would be visible from the view depicted in FIG. 4. For example, in embodiments, the ends of the tooth channels 142 terminating at the respective tooth 134 would each be oriented at a different position relative to a front end and a rear end of the tooth 134 to be closer to or further from an adjacent tooth 134 such that the tooth channels 142 would not completely overlap one another along the +/X axis of the coordinate axes depicted in the drawings.

The journal pin 112 (FIG. 3) includes a central longitudinal axis 15 extending parallel to the axis 13 of the planet gear 106 (FIG. 2). As shown in FIG. 3, the axis 15 of the journal pin 112 is coaxial with the axis 13 of the planet gear 106. However, in embodiments, the axis 15 of the journal pin 112 is offset from an axis 13 of the planet gear 106. Therefore, a thickness of the lubricant 119 (FIG. 2) within the gap 132 (FIG. 3) may vary circumferentially around the journal pin 112. Accordingly, this results in varying pressure and/or temperature of the lubricant 119. It may be desirable to "phase" the lubricant supply to respective teeth 134 of the planet gear 106. For example, it may be desirable to draw the lubricant 119 from a particular location of the journal bearing 133 offset from the tooth 134 at which the lubricant 119 is delivered due to specific temperature and/or pressure constraints. Specifically, it may be preferable to draw the lubricant 119 having a temperature and/or pressure different than that of the lubricant 119 directly at the tooth 134 that will be meshing with an adjacent gear 202. Therefore, rather than the tooth channels 142 extending in a linear direction, as described herein and illustrated in FIG. 3, in embodiments, the location at which the lubricant 119 exits the journal bearing 133 is offset from the tooth 134 to which the lubricant 119 is delivered. For example, the tooth 134 nearest the location at which the lubricant 119 exits the journal bearing 133 may be one tooth 134 away from the tooth 134 to which the lubricant 119 is delivered. In other embodiments, the tooth 134 nearest the location at which the lubricant 119 exits the journal bearing 133 may be two teeth 134 away from the tooth 134 to which the lubricant 119 is delivered. In other embodiments, the tooth 134 nearest the location at which the lubricant 119 exits the journal bearing 133 may be three teeth 134 away from the tooth 134 to which the lubricant 119 is delivered. In other embodiments, the tooth 134 nearest the location at which the lubricant 119 exits the journal bearing 133 may be more than three teeth 134 away from the tooth 134 to which the lubricant 119 is delivered. As shown in FIG. 4, the tooth 134 nearest the location at which the lubricant 119 exits the journal bearing 133 is four teeth 134 away from the tooth to which the lubricant 119 is delivered. Thus, in the embodiment illustrated in FIG. 4, the tooth channels 142 extending between the journal bearing 133 and the teeth 134 of the planet gear 106 have a serpentine path. In this embodiment, it may be more likely that the planet gear 106 is formed by milling channels defining distributor channels 138 and tooth channels 142 into plates, and then laminating the plates together to form a layer stack, rather than drilling the serpentine passageways into a previously formed planet gear 106.

Referring now to FIG. 5, a partial enlarged schematic view of one of the teeth 134 of the planet gear 106 is illustrated. In embodiments in which the lubricant (FIG. 2) is delivered to each of the teeth 134 of the planet gear 106 and the tooth channels 142 have the above disclosed serpentine geometry, parameters are to be satisfied to ensure that the one or more tooth channels 142 of an associated tooth 134 does not interfere with the one or more tooth channels 142 of an adjacent tooth 134. Accordingly, the following expression (1) must be satisfied:

$$(t + \Phi_{tube}) \times \frac{\Theta N}{2_{\pi}} + 2t < w \qquad (1)$$

In the above expression (1), t represents a distance between two adjacent tooth channels 142, $\Phi_{tube}$ represents a diameter of the tooth channel 142, $\Theta$ represents a circumference distance travelled along the planet gear 106 between an end of the tooth channel 142 extending from the distributor channel 138 and an opposite end of the tooth channel 142 within the associated tooth 134, N represents the total number of teeth 134 on the planet gear 106, and w represents a thickness of the planet gear 106 extending between the inner surface 140 of the planet gear and the outer surface 144 of the planet gear 106 from which the tooth 134 extends.

If the above expression (1) is not satisfied after inputting the known variables, the variables should be adjusted. For example, the distance t between two adjacent tooth channels 142 may need to be decreased, the diameter $\Phi_{tube}$ of the tooth channel 142 may need to be decreased, the circumferential distance traveled $\Theta$ may need to be decreased, the number N of teeth 134 may need to be decreased, and/or a thickness w of the planet gear 106 may need to be increased. As noted above, it should be noted that the above expression (1) only applies when a tooth channel 142 is formed. Accordingly, another solution would be to not form a tooth channel 142 for each associate tooth 134 such as, for example, alternating teeth 134.

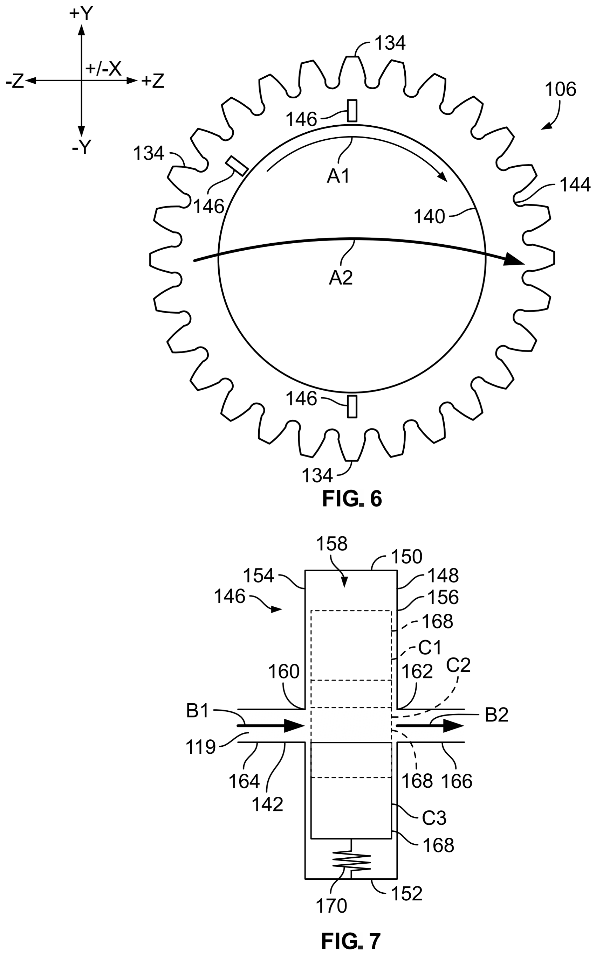

Referring now to FIG. 6, a partial view of the planet gear 106 is illustrated including a plurality of valves 146 to control the flow of the lubricant 119 (FIG. 2) through a particular tooth channel 142. Although only three valves 146 are illustrated, it should be appreciated that the planet gear 106 may include a valve 146 associated with each tooth 134. During operation of the gearbox assembly 46 (FIG. 2), the planet gear 106 experiences two distinct centrifugal forces. Specifically, the planet gear 106 experiences a first centrifugal force, as shown by arrow A1, about a rotational center of the planet gear 106, and a second centrifugal force, as shown by arrow A2, caused by rotation of the planet carrier 110 (FIG. 2). The cyclic rotating relationship between the first centrifugal force A1 and the second centrifugal force A2 creates a radial and circumferential excitation force. This excitation force results in operation of the valves 146 based on a rotational position of the valves 146, as described in more detail herein. In embodiments, the valves 146 are shuttle valves, flapper valves, or the like.

Specifically, as shown in FIG. 7, an enlarged view of one of the valves 146 is depicted. The valve 146 includes a valve body 148 having an outer end surface 150, an inner end surface 152 opposite the outer end surface 150, a first side wall 154, and a second side wall 156 opposite the first side wall 154. The first side wall 154 and the second side wall 156 extend between the outer end surface 150 and the inner end surface 152. As used herein, the outer end surface 150 refers to the surface of the valve body 148 facing the outer surface 144 of the planet gear 106 (FIG. 3), and the inner end surface 152 refers to the surface of the valve body 148 facing the inner surface 140 of the planet gear 106 (FIG. 3). The valve body 148 defines an open interior 158. The first side wall 154 has an inlet 160 formed between the outer end surface 150 and the inner end surface 152, and the second side wall 156 has an outlet 162 formed between the outer end surface 150 and the inner end surface 152. The inlet 160 and the outlet 162 are aligned with one another. As noted above, each valve 146 is positioned within a respective tooth channel 142. Accordingly, as shown in FIG. 7, the valve 146 is shown positioned within a tooth channel 142 such that an upstream portion 164 of the tooth channel 142 extends from the inlet 160 to permit the lubricant 119 to flow into the valve 146, as shown by arrow B1, and a downstream portion 166 of the tooth channel 142 extends from the outlet 162 to permit the lubricant 119 to exit the valve 146, as shown by arrow B2.

As shown in FIG. 7, the valve 146 includes a mass 168 and is depicted in each of a first open position C1, shown in dashed lines, a closed position C2, shown in dashed lines, and a second open position C3, shown in solid lines. The mass 168 is movable within the open interior 158 of the valve body 148 along a longitudinal direction extending between the outer end surface 150 and the inner end surface 152. When the mass 168 is in either the first open position C1 or the second open position C3, the lubricant 119 is permitted to pass from the inlet 160 to the outlet 162 of the valve 146. Alternatively, when the mass 168 is in the closed position C2, the lubricant 119 is inhibited from passing from the inlet 160 to the outlet 162 of the valve 146.

In embodiments, the mass 168 is freely movable within the open interior 158 of the valve body 148 based on a direction of the excitation force imparted onto the mass 168. For example, during a complete rotation of the planet gear 106 and the planet carrier 110 (FIG. 2), the mass 168 may move from the first open position C1 to the closed position C2, from the closed position C2 to the second open position C3, from the second open position C3 back to the closed position C2, and from the closed position C2 back to the first open position C1. It should be appreciated that the valve 146 may be located along any portion of the tooth channel 142 such that the excitation force causes the mass 168 to move from the closed position C2 into either the first open position C1 or the second open position C3 when the tooth 134 associated with the valve 146 is meshing with teeth 200 of an adjacent gear 202 (FIG. 5). Alternatively, the excitation force causes the mass 168 to move from the first open position C1 or the second open position C3 to the closed position C2 when the tooth 134 associated with the valve 146 is not meshing with teeth 200 of an adjacent gear 202 (FIG. 5). In embodiments, the mass 168 itself may be tuned to account for the desired position of the mass 168 between the various positions.

In embodiments, the valve 146 may include a damper 170 fixed to the inner end surface 152 of the valve body 148 and an end of the mass 168 opposite the outer end surface 150 of the valve body 148. Accordingly, the damper 170 provides a biasing force against the mass 168 to push the mass 168 toward the outer end surface 150 and into the first open position C1. During operation of the gearbox assembly 46 (FIG. 2), once the excitation force exceeds the biasing force of the damper 170, the mass 168 may be permitted to move from the first open position C1 to the closed position C2, and subsequently the second open position C3. Thereafter, once the excitation force drops below the biasing force of the damper 170, the mass 168 may be permitted to move back to the first open position C1. In embodiments, the damper 170 may be any suitable device such as, for example, a spring, compressible elastomer, or the like.

From the above, it is to be appreciated that defined herein is a turbine engine including a gearbox assembly designed to distribute lubricant to teeth of the gears of the gearbox assembly during intermeshing with adjacent gears, thereby increasing efficiency and lubrication of the gearbox assembly. Particularly, the gearbox assembly includes a planet gear having an outer surface and an inner surface opposite the outer surface. A pair of circumferential oil channels are formed in the inner surface proximate opposite ends of the planet gear, a distributor channel is formed to extend in a longitudinal direction toward a center of the planet gear from each circumferential oil channel, and one or more tooth channels are formed to extend from each distributor channel to the outer surface of the planet gear. A journal pin is received within the planet gear extending along an axis about which the planet gear rotates. A gap defining a journal bearing is formed between the inner surface of the planet gear and the journal pin. An oil passage is provided supplying oil to the gap. Accordingly, lubricant may be delivered to the teeth.

Further aspects of the embodiments described herein are provided by the subject matter of the following clauses:

A gearbox assembly comprising: a planet gear comprising: an outer surface; and an inner surface opposite the outer surface, wherein a pair of circumferential oil channels are formed in the inner surface proximate opposite ends of the planet gear, a distributor channel is formed to extend in a longitudinal direction toward a center of the planet gear from each circumferential oil channel, and one or more tooth channels are formed to extend from each distributor channel to the outer surface of the planet gear; and a journal pin received within the planet gear extending along an axis about which the planet gear rotates, a gap defining a journal bearing formed between the inner surface of the planet gear and the journal pin, and an oil passage is provided supplying oil to the gap.

The gearbox assembly of any preceding clause, wherein the distributor channel is oriented at an angle θ relative to the inner surface of the planet gear, the angle θ being greater than 0 degrees and less than 90 degrees.

The gearbox assembly of any preceding clause, wherein a plurality of tooth channels extend from each distributor channel to the outer surface of the planet gear.

The gearbox assembly of any preceding clause, wherein the plurality of tooth channels extending from each distributor channel is equidistantly spaced apart from one another.

The gearbox assembly of any preceding clause, wherein the oil passage of the journal pin comprises: a longitudinal component extending from an end of the journal pin parallel to the axis; and a radial component extending from an end of the longitudinal component to the gap.

The gearbox assembly of any preceding clause, wherein the radial component extends perpendicular to the longitudinal component.

The gearbox assembly of any preceding clause, wherein: the planet gear comprises a plurality of teeth formed at the outer surface of the planet gear; and the one or more tooth channels comprises a plurality of tooth channels, each tooth channel of the plurality of tooth channels extends to a respective tooth of the plurality of teeth.

The gearbox assembly of any preceding clause, wherein: the planet gear comprises a plurality of teeth formed at the outer surface of the planet gear; and the one or more tooth channels comprises a plurality of tooth channels, each tooth channel of the plurality of tooth channels defines a serpentine path extending from the distributor channel to a respective tooth of the plurality of teeth.

The gearbox assembly of any preceding clause, further comprising a valve positioned within the one or more tooth channels.

The gearbox assembly of any preceding clause, wherein the valve comprises: a valve body; and a mass positionable within the valve body between a first open position, a closed position, and a second open position.

The gearbox assembly of any preceding clause, wherein: the valve body includes an inlet formed in a first side wall and an outlet formed in a second side wall, the one or more tooth channels extending from the inlet and the outlet of the valve; a lubricant is permitted to flow into the valve through the inlet and out of the valve through the outlet when the mass is in either the first open position or the second open position; and the lubricant is inhibited from flowing into the valve through the inlet and out of the valve through the outlet when the mass is in the closed position.

The gearbox assembly of any preceding clause, wherein the valve comprises a damper biasing the mass toward the first open position.

A turbine engine comprising: a fan section including a fan; a fan shaft coupled to the fan, the fan shaft configured to rotate the fan; a turbine section including an input shaft; and a gearbox assembly coupled to the input shaft and the fan shaft, such that the gearbox assembly transfers rotational motion from the input shaft to the fan shaft, the gearbox assembly comprising a planet gear including: an outer surface; and an inner surface opposite the outer surface, a pair of circumferential oil channels are formed in the inner surface proximate opposite ends of the planet gear, a distributor channel is formed to extend in a longitudinal direction toward a center of the planet gear from each circumferential oil channel, and a plurality of tooth channels are formed to extend from each distributor channel to the outer surface of the planet gear; and a journal pin received within the planet gear extending along an axis about which the planet gear rotates, and an oil passage formed in the journal pin extending from an end of the journal pin to an outer surface of the journal pin.

The turbine engine of any preceding clause, wherein each distributor channel is oriented at an angle θ relative to the inner surface of the planet gear, the angle θ being greater than 0 degrees and less than 90 degrees.

The turbine engine of any preceding clause, wherein: the planet gear comprises a plurality of teeth formed at the outer surface of the planet gear; and each tooth channel of the plurality of tooth channels extends to a respective tooth of the plurality of teeth.

The turbine engine of any preceding clause, wherein: the planet gear comprises a plurality of teeth formed at the outer surface of the planet gear; and each tooth channel of the plurality of tooth channels defines a serpentine path extending from the distributor channel to a respective tooth of the plurality of teeth.

A method comprising: directing a lubricant from an oil passage of a journal pin into a gap defined between an inner surface of a planet gear and the journal pin about which the planet gear rotates, the lubricant within the gap defining a journal bearing; and rotating the planet gear to create a centrifugal force causing the lubricant to flow from the gap into a pair of circumferential oil channels, a pair of distributor channels extending from the pair of circumferential oil channels, and a plurality of tooth channels extending from each of the pair of distributor channels to a plurality of teeth formed at an outer surface of the planet gear.

The method of any preceding clause, wherein the plurality of tooth channels define a serpentine path extending from the distributor channels to a respective tooth of the plurality of teeth.

The method of any preceding clause, further comprising operating a valve positioned within a respective tooth channel of the plurality of tooth channels between a first open position, a closed position, and a second open position based on the centrifugal force imparted onto the valve.

The method of any preceding clause, wherein: the lubricant is permitted to flow through the valve when the valve is in the first open position or the second open position; and the lubricant is inhibited from flowing through the valve when the valve is in the closed position.

The gearbox assembly of any preceding clause, wherein each distributor channel is oriented at an angle $\theta$ relative to the inner surface of the planet gear, the angle $\theta$ being 30 degrees +/- 10 degrees.

The gearbox assembly of any preceding clause, wherein each distributor channel is oriented at an angle $\theta$ relative to the inner surface of the planet gear, the angle $\theta$ being 30 degrees +/- 20 degrees.

The gearbox assembly of any preceding clause, wherein the distributor channels are oriented at different angles.

The gearbox assembly of any preceding clause, further comprising a sealing surface is provided at one or both of the opposite open longitudinal ends of the gap defining the journal bearing.

The gearbox assembly of any preceding clause, wherein the following expression (1) is satisfied:

$$(t + \Phi_{tube}) \times \frac{\Theta N}{2_{\pi}} + 2t < w$$

wherein $t$ represents a distance between two adjacent tooth channels, $\Phi_{tube}$ represents a diameter of the tooth channels, $\Theta$ represents a circumference distance travelled along the planet gear between an end of the tooth channel extending from the distributor channel and an opposite end of the tooth channel within the associated tooth, N represents the total number of teeth on the planet gear, and w represents a thickness of the planet gear extending between the inner surface of the planet gear and the outer surface of the planet gear from which the tooth extends.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

**1.** A gearbox assembly (46) comprising:

a planet gear (106) comprising:

an outer surface (144); and
an inner surface (140) opposite the outer surface (144), wherein a pair of circumferential oil channels (136) are formed in the inner surface (140) proximate opposite ends of the planet gear (106), a distributor channel (138) is formed to extend in a longitudinal direction toward a center of the planet gear (106) from each circumferential oil channel (136), and one or more tooth channels (142) are formed to extend from each distributor channel (138) to the outer surface (144) of the planet gear (106); and

a journal pin (112) received within the planet gear (106) extending along an axis (13) about which the planet gear (106) rotates, a gap (132) defining a journal bearing (133) formed between the inner surface (140) of the planet gear (106) and the journal pin (112), and an oil passage (114) is provided supplying oil to the gap (132).

**2.** The gearbox assembly (46) of claim 1, wherein the distributor channel (138) is oriented at an angle relative to the inner surface (140) of the planet gear (106), the angle $\theta$ being greater than 0 degrees and less than 90 degrees.

**3.** The gearbox assembly (46) of claim 1 or 2, wherein a plurality of tooth channels (142) extend from each distributor channel (138) to the outer surface (144) of the planet gear (106).

**4.** The gearbox assembly (46) of claim 3, wherein the plurality of tooth channels (142) extending from each distributor channel (138) is equidistantly spaced apart from one another.

**5.** The gearbox assembly (46) of any one of claims 1-4, wherein the oil passage (114) of the journal pin (112) comprises:

a longitudinal component (128) extending parallel to the axis (13); and
a radial component (130) extending from an end of the longitudinal component (128).

**6.** The gearbox assembly (46) of claim 5, wherein the radial component (130) extends perpendicular to the longitudinal component (128).

**7.** The gearbox assembly (46) of any one of claims 1-4, wherein:

the planet gear (106) comprises a plurality of teeth (134) formed at the outer surface (144) of the planet gear (106); and
the one or more tooth channels (142) comprises a plurality of tooth channels (142), each tooth channel (142) of the plurality of tooth channels (142) extends to a respective tooth (134) of the plurality of teeth (134).

**8.** The gearbox assembly (46) of any one of claims 1-4, wherein:

the planet gear (106) comprises a plurality of teeth (134) formed at the outer surface (144) of the planet gear (106); and
the one or more tooth channels (142) comprises a plurality of tooth channels (142), each tooth channel (142) of the plurality of tooth channels (142) defines a serpentine path extending from the distributor channel (138) to a respective tooth (134) of the plurality of teeth (134).

**9.** The gearbox assembly (46) of any one of claims 1-4, further comprising a valve (126) positioned within the one or more tooth channels (142).

**10.** The gearbox assembly (46) of claim 9, wherein the valve (126) comprises:

a valve body (148); and
a mass (168) positionable within the valve body (148) between a first open position, a closed position, and a second open position.

**11.** The gearbox assembly (46) of claim 10, wherein:

the valve body (148) includes an inlet (160) formed in a first side wall (154) and an outlet (162) formed in a second side wall (156), the one or more tooth channels (142) extending from the inlet (160) and the outlet (162) of the valve (126);
lubricant (119) is permitted to flow into the valve (126) through the inlet (160) and out of the valve (126) through the outlet (162) when the mass (168) is in either the first open position or the second open position; and
lubricant (119) is inhibited from flowing into the valve (126) through the inlet (160) and out of the valve (126) through the outlet (162) when the mass (168) is in the closed position.

**12.** The gearbox assembly (46) of claim 10, wherein the valve (126) comprises a damper (170) biasing the mass (168) toward the first open position.

**13.** A method comprising:

directing a lubricant (119) from an oil passage (114) of a journal pin (112) into a gap (132) defined between an inner surface (140) of a planet gear (106) and the journal pin (112) about which the planet gear (106) rotates, the lubricant (119) within the gap (132) defining a journal bearing (133); and
rotating the planet gear (106) to create a centrifugal force causing the lubricant (119) to flow from the gap (132) into a pair of circumferential oil channels (136), a pair of distributor channels (138) extending from the pair of circumferential oil channels (136), and a plurality of tooth channels (142) extending from each of the pair of distributor channels (138) to a plurality of teeth (134) formed at an outer surface (144) of the planet gear (106).

**14.** The method of claim 13, wherein the plurality of tooth channels (142) define a serpentine path extending from the distributor channel (138) to a respective tooth (134) of the plurality of teeth (134).

**15.** The method of any one of claims 13-14, further comprising operating a valve (126) positioned within a respective tooth channel (142) of the plurality of tooth channels (142) between a first open position, a closed position, and a second open position based on the centrifugal force imparted onto the valve (126).

10
12
14
16
18
20
21
22
24
26
27
28
30
32
34
36
38
40
42
44
45
46
48
50
52
54
56
58
60
62
64
66
68
70
72
74
76
78
P
A
R

FIG. 1

+Y
+/-Z
-X
+X
-Y
46
108
102
286
106
110
120
119
116
112
122
13
124
126
114
118
36
45
104
12

FIG. 2

+Y
+/-Z
-X
+X
-Y
138
134
144
142
106
136
θ
θ'
135
140
133
132
15
13
130
112
128
114
FIG. 3

+Y
-Y
-Z
+Z
+/-X
106
133
142
134
112
202
200
142
134
142
134
200
202
+Y
-Y
-Z
+Z
+/-X
140
Θ
w
θ = 2π/N
106
144
134

FIG. 4

FIG. 5

+Y
-Y
-Z
+Z
+/-X
134
106
146
A1
144
140
A2
146
134
FIG. 6
158
150
154
148
146
156
168
C1
160
162
C2
B1
B2
119
164
142
168
166
C3
168
170
152
FIG. 7

# EUROPEAN SEARCH REPORT

Application Number
EP 25 20 7598

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 211 059 342 U (NANJING HIGH SPEED & ACCURATE GEAR GROUP CO LTD) 21 July 2020 (2020-07-21) * paragraphs [0035] - [0039] * * figures 1, 2, 3 * * the whole document * ----- | 1-15 | INV. F16H57/04 F02C7/36 F16H57/08 F16C17/02 |
| A | US 2019/203768 A1 (MEYER THOMAS [DE]) 4 July 2019 (2019-07-04) * paragraphs [0063] - [0065] * * figure 3 * * the whole document * ----- | 1-15 | |
| A | EP 4 056 829 A1 (SAFRAN TRANS SYSTEMS [FR]) 14 September 2022 (2022-09-14) * paragraph [0032] * * figures 1, 3, 4, 5, 6, 7, 8 * * the whole document * ----- | 1-15 | |
| A | CN 117 090 925 A (AICI TECH TIANJIN CO LTD) 21 November 2023 (2023-11-21) * the whole document * ----- | 1-15 | TECHNICAL FIELDS SEARCHED (IPC) F16H F02C F16C |

The present search report has been drawn up for all claims

1

| Place of search | Date of completion of the search | Examiner |
|---|---|---|
| Munich | 12 February 2026 | Ehrsam, Adrian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 20 7598

This annex lists the patent family members relating to the patent documents cited in the above-mentioned European search report. The members are as contained in the European Patent Office EDP file on
The European Patent Office is in no way liable for these particulars which are merely given for the purpose of information.

12-02-2026

| Patent document cited in search report | Publication date | Patent family member(s) | Publication date |
|---|---|---|---|
| CN 211059342 U | 21-07-2020 | NONE | |
| US 2019203768 A1 | 04-07-2019 | CN 109661531 A | 19-04-2019 |
| | | EP 3290751 A1 | 07-03-2018 |
| | | EP 3507526 A1 | 10-07-2019 |
| | | ES 2814177 T3 | 26-03-2021 |
| | | ES 2925386 T3 | 17-10-2022 |
| | | US 2019203768 A1 | 04-07-2019 |
| | | WO 2018041671 A1 | 08-03-2018 |
| EP 4056829 A1 | 14-09-2022 | EP 4056829 A1 | 14-09-2022 |
| | | FR 3120657 A1 | 16-09-2022 |
| CN 117090925 A | 21-11-2023 | NONE | |

EPO FORM P0459

For more details about this annex : see Official Journal of the European Patent Office, No. 12/82